# EUROPÄISCHE PATENTSCHRIFT

(11) **EP 0 838 384 B1**
(45) Veröffentlichungstag und Bekanntmachung des Hinweises auf die Patenterteilung: **02.04.2003**
(21) Anmeldenummer: 96810706.0
(22) Anmeldetag: 23.10.1996
(51) Int. Cl.: B61D 17/08, B61D 17/04

(54) **Fahrzeugkasten eines Schienenfahrzeuges und Schienenfahrzeug mit einem derartigen Fahrzeugkasten**
Body of a railway vehicle and railway vehicle with such a body
Caisse d'un véhicule ferroviaire et véhicule ferroviaire avec une telle caisse

(43) Veröffentlichungstag der Anmeldung: 29.04.1998
(73) Patentinhaber: Bombardier Transportation GmbH, 13627 Berlin (DE)
(72) Erfinder: Imboden, Lukas, 8401 Wintherthur (CH); Stutz, Alex, 8810 Horgen (CH)
(74) Vertreter: Cohausz & Florack

(56) Entgegenhaltungen:
- DE-U- 9 306 853
- FR-A- 826 868
- FR-A- 2 364 798

## Beschreibung

Die Erfindung betrifft einen Fahrzeugkasten gemäss dem Oberbegriff des Patentanspruchs 1 sowie ein Schienenfahrzeug mit mindestens einem derartigen Fahrzeugkasten.

Bei einer bekannten Ausführung der genannten Art weist der Fahrzeugkasten eine Struktur aus Stahlblech-Vierkantrohren und -Abkantprofilen auf und enthält in den Seitenwänden Fachwerkkonstruktionen, bei denen die Oberund Untergurte miteinander durch über eine Fensteröffnung verlaufende Diagonalstreben verbunden sind, deren Längsachsen sich abwechselnd im Bereich des Obergurts und des Untergurts kreuzen (Druckschrift "Der Nahverkehr", Heft 4/95, Seite 15; Alba Fachverlag, Düsseldorf). Derartige Fachwerkanordnungen, mit relativ grossen Abständen zwischen Obergurt und Untergurt und entsprechend grossen freien Längen der Diagonalstreben, erfordern die Verwendung von Diagonalstreben relativ grossen Querschnitts und eine relativ aufwendige Ausführung der durch die eingeleiteten Stabkräfte örtlich entsprechend hoch belasteten Ober- und Untergurte. Durch die Diagonalstreben kann zudem, je nach der Anordnung der Sitze im Fahrzeug, die Sicht nach aussen beeinträchtigt werden.

Der Erfindung liegt die Aufgabe zugrunde, einen insbesondere in dieser Hinsicht weiter entwickelten Fahrzeugkasten der eingangs genannten Art in einer gegenüber bisherigen Ausführungen leichteren Bauweise zu schaffen, durch welche mit relativ einfachen, leichten Bauteilen eine Kastenkonstruktion erzielt werden kann, welche einerseits eine ausreichende Steifigkeit des Kastens gewährleistet und andererseits vorbestimmte Verwindungen des Kastens um seine Längsachse zulässt.

Diese Aufgabe wird erfindungsgemäss mit einem Fahrzeugkasten gelöst, welcher die Merkmale im kennzeichnenden Teil des unabhängigen Patentanspruchs 1 aufweist. Ein Schienenfahrzeug mit mindestens einem derartigen Fahrzeugkasten ist Gegenstand des Anspruchs 9. Ausgestaltungen des Erfindungsgegenstandes sind in den abhängigen Ansprüchen angegeben.

Durch die erfindungsgemäss in jeder Seitenwand des Fahrzeugkastens vorgesehene fachwerkartige Tragkonstruktion mit zwischen Ober- und Untergurt sich kreuzenden Füllstäben ist mit einfach herstellbaren und einfach montierbaren Bauteilen eine gegenüber bisherigen Ausführungen günstiger beanspruchte, leichte und zugleich stabile Kastenkonstruktion erzielbar, welche eine erhebliche Gewichts- und Kostenersparnis ermöglicht. Insbesondere wird jeweils die freie Länge jedes der Füllstäbe unterteilt, wobei eine Steifigkeit der Konstruktion erzielbar ist, die mindestens derjenigen bisheriger Ausführungen entspricht. Zugleich können die Anschlussstellen der je paarweise sich kreuzenden Füllstäbe am Ober- bzw. Untergurt in frei wählbaren Abständen voneinander angeordnet und damit je für sich für die Einleitung der Stabkräfte in den betreffenden Längsträger dimensioniert werden. Entsprechend können die Längsträger je in einer gegenüber bisherigen Ausführungen leichteren Bauweise, z.B. in Form von Strangpressprofilen aus Aluminium, ausgeführt sein.

Weitere Einzelheiten und Merkmale ergeben sich aus der folgenden Beschreibung eines in der Zeichnung schematisch dargestellten Ausführungsbeispiels nach der Erfindung, in Verbindung mit den Patentansprüchen. Es zeigen:
- Fig.1: ein Schienenfahrzeug, ausgeführt als dreiteiliger Gelenktriebwagen, mit erfindungsgemäss ausgebildeten Fahrzeugkästen,
- Fig.2: eine Innenansicht des Fahrzeugkastens nach Fig.1 in einem Teillängsschnitt, in einer grösseren Darstellung, und
- Fig.3: eine Einzelheit eines Fahrzeugkastens in einem Teilschnitt entsprechend der Linie III - III in Fig.2.

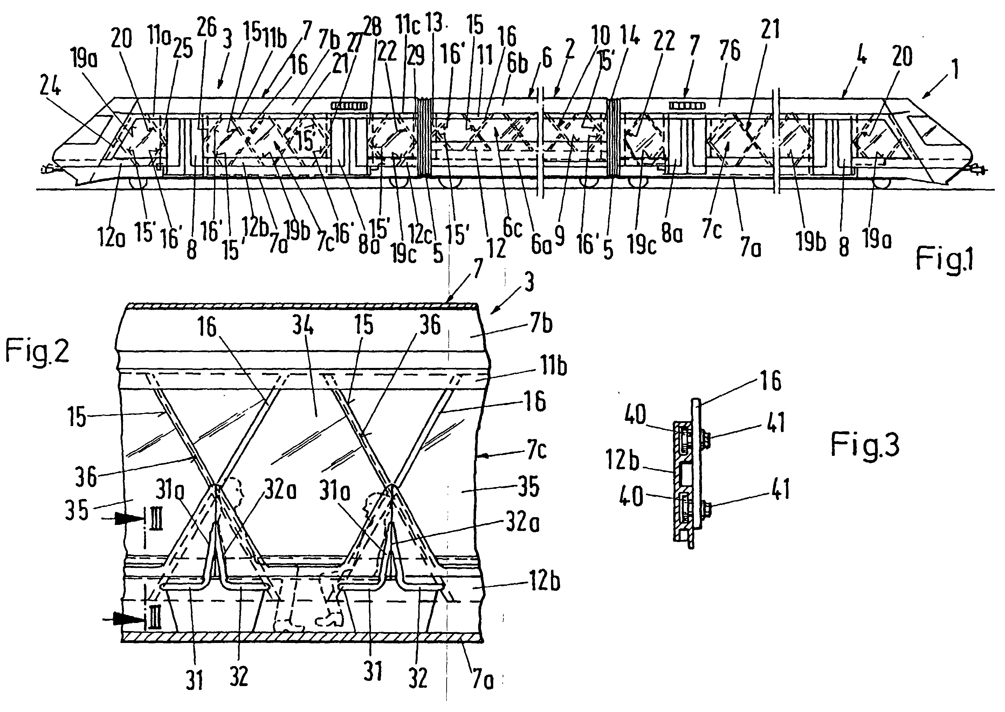

Das Schienenfahrzeug 1 nach Fig.1 enthält einen mittleren Triebwagenteil 2 und zwei äussere Triebwagenteile 3 und 4, welche mit dem mittleren Triebwagenteil 2 gelenkig und lösbar gekoppelt und mit diesem über einen Faltenbalg 5 verbunden sind. Die äusseren Triebwagenteile 3 und 4, welche je über den grössten Teil ihrer Länge in Niederflurbauweise ausgeführt sind, enthalten je einen Fahrzeugkasten 7 mit einer Bodenpartie 7a, einer Dachpartie 7b und zwei Seitenwänden 7c, welche je zwei Türen 8 und 8a aufweisen. Der mittlere Triebwagenteil 2, welcher darstellungsgemäss in Hochflurbauweise ausgeführt ist, enthält einen jeweils von den äusseren Triebwagenteilen 3 bzw. 4 her zugänglichen Fahrzeugkasten 6 mit einer Bodenpartie 6a, einer Dachpartie 6b und zwei je von Türen freie Seitenwände 6c.

Die Seitenwände 6c enthalten je eine fachwerkartige Tragkonstruktion 10, welche sich über eine Fensteröffnung 9 erstreckt, die im wesentlichen über die ganze Länge des Fahrzeugkastens 6 verläuft. Die Tragkonstruktion 10 enthält zwei je einen Obergurt und einen Untergurt bildende Längsträger 11 bzw. 12 und zwei mit deren Enden und mit der Bodenpartie 6a verbundene Stützträger 13 und 14 sowie mehrere, die Längsträger 11 und 12 verbindende, schräggestellte Füllstäbe 15 und 16, welche paarweise, mit in einer bestimmten Höhenlage zwischen den Längsträgern 11 und 12 sich X-förmig kreuzenden Längsachsen angeordnet sind. Die Enden der Tragkonstruktion 10 sind je durch einen der Stützträger 13 bzw. 14 und zwei Füllstäbe 15' und 16' gebildet, welche - je paralle zu den Füllstäben 15 bzw. 16 - mit im Bereich der Stützträger 13 und 14 in der entsprechenden Höhenlage sich kreuzenden Längsachsen angeordnet sind.

Die Füllstäbe 15, 16, 15' und 16' können miteinander und mit den Längsträgern 11, 12 und den Stützträgern 13 und 14 auf beliebige Weise fest verbunden, z.B. verschweisst werden. Gemäss Fig.3 können die Füllstäbe 15, 16, 15', 16' auch mittels Klemmstücken 40 und Schrauben 41 an Längsträgern 12b bzw. an den entsprechenden Längsträgern 11, 11a, 11b, 12, 12a angeschlossen sein, welche darstellungsgemäss in Form von Strangpressprofilen ausgeführt sein können.

Die Seitenwände 7c der Fahrzeugkästen 3 und 4 enthalten je drei fachwerkartige Tragkonstruktionen 20, 21 und 22, welche sich je über eine zwischen der Frontpartie des Fahrzeugkastens 7 und dem Rahmen der Tür 8 angeordnete, erste Fensteröffnung 19a bzw. eine zwischen den Rahmen der Türen 8 und 8a angeordnete zweite Fensteröffnung 19b bzw. eine zwischen dem Rahmen der Tür 8a und einer dem Fahrzeugkasten 6 zugewandten Anschlusspartie des Fahrzeugkastens 7 angeordnete dritte Fensteröffnung 19c erstrecken. Die Tragkonstruktionen 20, 21 und 22 enthalten je einen entlang der Niederflur-Bodenpartie 7a verlaufenden Längsträgerteil 12a, 12b bzw. 12c, von denen jeder über zwei Stützträger 24, 25 bzw. 26, 27 bzw. 28, 29 mit einem oberen Längsträgerteil 11a, 11b bzw. 11c und der Bodenpartie 7a verbunden ist, wobei die Stützträger 25 und 26 bzw. 27 und 28 je einen Teil des Rahmens der Tür 8 bzw. 8a bilden. In der mittleren Tragkonstruktion 21 sind die Längsträgerteile 11b und 12b über die Füllstäbe 15, 16, 15' und 16' verbunden, deren Anordnung, abgesehen von unterschiedlichen Längenabmessungen, im wesentlichen derjenigen in der Tragkonstruktion 10 des mittleren Kastens 6 entspricht. In den Tragkonstruktionen 20 und 22 sind die Längssträgerteile 11a und 12a bzw. 11c und 12c mit den Stützträgern 24 und 25 bzw. 28 und 29 über entsprechende Füllstäbe 15' und 16' verbunden. Anstelle der dargestellten, jeweils an die Türrahmen anschliessenden Längsträgerteile 11a, 11b und 11c kann auch ein einziger, im wesentlichen über die Länge der Seitenwand 7c verlaufender oberer Längsträger vorgesehen sein.

Wie insbesondere aus der Fig.2 hervorgeht, könnnen die Füllstäbe 15 und 16 sowie 15' und 16' so angeordnet sein, dass sie sich innerhalb des Höhenbereichs der Fensteröffnungen 9, 19, 19b, 19c in Abständen voneinander kreuzen, welche den Abständen zwischen innerhalb des Fahrzeugkastens 6 bzw. 7 über dessen Länge verteilt angeordneten Sitzreihen 31 und 32 entsprechen. Dabei sind die Kreuzungsstellen jeweils seitlich des Anordnungsbereichs der Rückenlehnen 31a und 32a der Sitzreihen 31 bzw. 32, darstellungsgemäss oberhalb der Rückenlehnen 31a und 32a, auf einer Höhenlage vorgesehen, welche annähernd der Kopfhöhe eines sitzenden Passagiers entspricht. Durch diese Ausführung ist eine sowohl für die Beanspruchung der tragenden Teile als auch für die Sicht nach aussen besonders günstige Fensteranordnung erzielbar, welche für die in den Sitzreihen 31 und 32 befindlichen Passagiere jeweils eine von den Füllstäben 15, 16, 15', 16' im wesentlichen unbeeinträchtigte Sicht nach aussen gewährleistet. Bei dieser Ausführung werden zugleich innerhalb der je über einen relativ grossen Längenabschnitt, beim mittleren Fahrzeugkasten 6 über dessen ganze Länge, sich erstreckenden Fensteröffnungen durch die sich kreuzenden Füllstäbe 15 und 16 bzw. 15' und 16' zwischen den Sitzreihen 31 und 32 gebildete Behaglichkeitszonen gegeneinander sichtbar abgegrenzt, so dass trotz der relativ grossen, offenen Fensterflächen eine mit der Innenausstattung übereinstimmende Strukturierung des Fahrgastraumes erzielbar ist.

Die Füllstäbe 15, 16 und 15', 16' dienen als Halterungen für eine in die jeweilige Fensteröffnung 9, 19a, 19b bzw. 19c einsetzbare, über diese durchlaufende Verglasung, welche jeweils an mindestens einem der gekreuzten Füllstäbe, z.B. mittels einer Klebverbindung, befestigt ist. Darstellungsgemäss kann die Verglasung in den mittleren Längenabschnitten der Fensteröffnungen jeweils an den Füllstäben 15, und in den Endabschnitten an den Füllstäben 15' und 16' befestigt sein. Entsprechend der Darstellung nach Fig.2 kann die Verglasung aus mehreren, in den mittleren Abschnitten der Fensteröffnungen 9 und 19b rhomboidförmigen, und in deren Endabschnitten trapezförmigen Platten 34 bzw. 35 gebildet sein, welche mit je im Bereich der Füllstäbe 15 positionierbaren, entsprechend deren Neigung verlaufenden Kanten ausgeführt sind und welche mit der benachbarten Platte 34 bzw. 35 eine entlang dem betreffenden Füllstab 15 verlaufende Trennfuge 36 begrenzen. Entsprechend ist eine Fensteranordnung mit einer relativ grossen Anzahl von unter sich gleichen, einfach geformten Platten 34 bzw. 35 erzielbar, wobei in den Fensteröffnungen 19a entsprechende trapezförmige Platten 35, und in den Fensteröffnungen 19c rechteckförmige Platten angeordnet sein können.

Zusammenfassend lässt sich die Erfindung wie folgt beschreiben:

Der Fahrzeugkasten weist zwei Seitenwände auf, welche je mindestens eine fachwerkartige Tragkonstruktion enthält. Die Tragkonstruktion weist einen Obergurt, einen Untergurt und mehrere, diese verbindende Füllstäbe auf, welche paarweise, mit innerhalb des Höhenbereichs einer Fensteröffnung der Seitenwand sich X-förmig kreuzenden Längsachsen, angeordnet sind. Dadurch ist eine Kastenkonstruktion in einer vorteilhaft leichten Bauweise erzielbar, wobei die relativ einfach und leicht ausführbaren Füllstäbe eine sichere Halterung für die Fensteröffnungen bilden. Die Kreuzungsstellen zwischen den Füllstäben sind je seitlich eines im Fahrzeug vorgesehenen Anordnungsbereichs für Rückenlehnen von Sitzreihen positionierbar, wodurch eine im wesentlichen unbeeinträchtigte Sicht nach aussen gewährleistet wird.

## Patentansprüche

1. Fahrzeugkasten eines Schienenfahrzeugs, mit einer Bodenpartie (6a, 7a), einer Dachpartie (6b, 7b) und zwei Seitenwänden (6c, 7c), welche je eine Tragkonstruktion (10, 20, 21, 22) enthalten, welche zwei je einen Obergurt und einen Untergurt bildende Längsträger (11, 11a, 11b, 11c bzw. 12, 12a, 12b, 12c) und mehrere, diese miteinander verbindende, schräggestellte Füllstäbe (15, 16, 15', 16') aufweist,
**dadurch gekennzeichnet, daß**
die Füllstäbe (15, 16, 15', 16') paarweise, mit im Höhenbereich einer Fensteröffnung zwischen den Längsträgern (11, 11a, 11b und 11c und 12, 12a, 12b, 12c) sich X-förmig kreuzenden Längsachsen angeordnet sind.

2. Fahrzeugkasten nach Anspruch 1, bei welchem die Füllstäbe (15, 16, 15', 16') zwischen mindestens zwei die Längsträger (11, 11a, 11b, 11c und 12, 12a, 12b, 12c) miteinander verbindenden Stützträgern (13 und 14, 24 und 25, 26 und 27, 28 und 29) angeordnet sind, wobei die diesen Stützträgern benachbarten Füllstäbe (15', 16') mit im Bereich der Stützträger (13, 14, 24, 25, 26, 27, 28, 29) sich kreuzenden Längsachsen angeordnet und je an den betreffenden Stützträger (13, 14, 24, 25, 26, 27, 28, 29) angeschlossen sind.

3. Fahrzeugkasten nach Anspruch 1 oder 2, bei welchem die Füllstäbe (15, 16, 15', 16') sich über eine in der Seitenwand (6c, 7c) angeordnete Fensteröffnung (9, 19a, 19b, 19c) erstrecken, wobei sich ihre Längsachsen innerhalb des Höhenbereichs der Fensteröffnung (9, 19a, 19b, 19c) kreuzen.

4. Fahrzeugkasten nach einem der vorangehenden Ansprüche, bei welchem sich die Fensteröffnung (9) im wesentlichen über die ganze Länge der betreffenden Seitenwand (6c) erstreckt.

5. Fahrzeugkasten nach einem der vorangehenden Ansprüche, bei welchem die Füllstäbe (15, 16, 15', 16') als Halterung für eine in die Fensteröffnung (9, 19a, 19b, 19c) einsetzbare und an zumindest einer Teilzahl der Füllstäbe (15, 16, 15', 16') befestigbare Verglasung ausgebildet sind.

6. Fahrzeugkasten nach Anspruch 5, bei welchem die Verglasung durch mindestens zwei je über einen Teilabschnitt der Länge der Tragkonstruktion (10, 20, 21, 22) sich erstreckende Platten (34, 35) gebildet ist, welche mit je im Bereich eines der gekreuzten Füllstäbe (15, 16) zusammenführbaren, entsprechend dessen Neigung verlaufenden Kanten ausgeführt sind, die miteinander eine auf dem betreffenden Füllstab (15, 16) positionierbare Trennfuge (36) begrenzen.

7. Fahrzeugkasten nach Anspruch 5 oder 6, welcher zur Aufnahme von mehreren Sitzreihen (31, 32) mit Rückenlehnen (31a, 32a) bestimmt ist, und bei welchem die Füllstäbe (15, 16, 15', 16') so angeordnet sind, dass sie sich jeweils in einem dem Anordnungsbereich der Rückenlehnen (31a, 32a) mindestens einer der Sitzreihen (31, 32) entsprechenden Längenabschnitt der Seitenwand (6c, 7c) kreuzen.

8. Fahrzeugkasten nach Anspruch 7, bei welchem sich die Füllstäbe (15, 16, 15', 16') auf einer Höhenlage kreuzen, welche zumindest annähernd der Höhe der Rückenlehnen (31a, 32a) der Sitzreihen (31, 32) entspricht.

9. Schienenfahrzeug, insbesondere Triebwagen, mit mindestens einem Fahrzeugkasten (6, 7) nach einem der Ansprüche 1 bis 8.

## Claims

1. A vehicle body of a rail vehicle, with a floor section (6a, 7a), a roof section (6b, 7b) and two side walls (6c, 7c) that respectively contain a support construction (10, 20, 21, 22) having two longitudinal beams (11, 11a, 11b, 11c and 12, 12a, 12b, 12c) that respectively form an upper chord and a lower chord and several inclined filler bars (15, 16, 15', 16') that connect the longitudinal beams to one another, **characterized by** the fact that the filler bars (15, 16, 15', 16') are arranged in pairs such that their longitudinal axes intersect one another in the shape of a X between the longitudinal beams (11, 11a, lib, 11c and 12, 12a, 12b, 12c) within the region of the height of a window opening.

2. The vehicle body according to Claim 1, wherein the filler bars (15, 16, 15', 16') are arranged between at least two support beams (13 and 14, 24 and 25, 26 and 27, 28 and 29) that connect the longitudinal beams (11, 11a, 11b, 11c and 12, 12a, 12b, 12c) to one another, wherein the filler bars (15', 16') situated adjacent to these support beams are arranged such that their longitudinal axes intersect one another in the region of the support beams (13, 14, 24, 25, 26, 27, 28, 29), and wherein these particular filler bars are respectively connected to the support beam (13, 14, 24, 25, 26, 27, 28, 29) in question.

3. The vehicle body according to Claim 1 or 2, wherein the filler bars (15, 16, 15', 16') extend over a window opening (9, 19a, 19b, 19c) arranged in the side wall (6c, 7c), and wherein the longitudinal axes of said filler bars intersect one another within the region of the height of the window opening (9, 19a, 19b, 19c).

4. The vehicle body according to one of the preceding claims, wherein the window opening (9) essentially extends over the entire length of the side wall (6c) in question.

5. The vehicle body according to one of the preceding claims, wherein the filler bars (15, 16, 15', 16') are realized in the form of holders for a glazing that can be inserted into the window opening (9, 19a, 19b, 19c) and fixed on at least some of the filler bars (15, 16, 15', 16').

6. The vehicle body according to Claim 5, wherein the glazing is formed by at least two plates (34, 35) that respectively extend over a part of the length of the support construction (10, 20, 21, 22), wherein said plates are realized with edges that respectively converge in the region of one of the intersecting filler bars (15, 16) and extend in accordance with its inclination, and wherein said edges collectively limit a partition joint (36) that can be positioned on the filler bars (15, 16) in question.

7. The vehicle body according to Claim 5 or 6, wherein said vehicle body is intended for accommodating several rows of seats (31, 32) with backrests (31a, 32a), and wherein the filler bars (15, 16, 15', 16') are arranged in such a way that they respectively intersect one another in a longitudinal section of the side wall (6c, 7c) which corresponds to the region in which the backrests (31a, 32a) of at least one row of seats (31, 32) are arranged.

8. The vehicle body according to Claim 7, wherein the filler bars (15, 16, 15', 16') intersect one another at an elevation that at least approximately corresponds to the height of the backrests (31a, 32a) of the rows of seats (31, 32).

9. A rail vehicle, in particular, motor rail car, with at least one vehicle body (6, 7) according to one of Claims 1 - 8.

## Revendications

1. Caisse de véhicule ferroviaire avec une partie de fond (6a, 7a), une partie de toit (6b, 7b) et deux parois latérales (6c, 7c) comportant respectivement une construction porteuse (10, 20, 21, 22), qui comprend deux poutres longitudinales (11, 11a, 11b, 11c, ou 12, 12a, 12b, 12c) formant chacune une membrure supérieure et une membrure inférieure et plusieurs barres de treillis (15, 16, 15', 16') placées en oblique et les reliant entre elles, dans laquelle les barres de treillis (15, 16, 15', 16') sont disposées par paires avec des axes longitudinaux se croisant en forme de X dans la zone de la hauteur d'une ouverture de fenêtre entre les poutres longitudinales (11, 11a, 11b et 11c, et 12, 12a, 12b, 12c).

2. Caisse de véhicule ferroviaire selon la revendication 1, avec laquelle les barres de treillis (15, 16, 15', 16') sont disposées entre au moins deux poutrelles de support (13 et 14, 24 et 25, 26 et 27, 28 et 29) reliant entre elles les poutres longitudinales (11, 11a, 11b, 11c, et 12, 12a, 12b, 12c), les barres de treillis (15' 16') voisines de ces poutrelles de support étant disposées avec des axes longitudinaux se croisant dans la zone des poutrelles de support (13, 14, 24, 25, 26, 27, 28, 29) et étant raccordées respectivement aux poutrelles de support correspondantes (13, 14, 24, 25, 26, 27, 28, 29).

3. Caisse de véhicule ferroviaire selon la revendication 1 ou 2, dans laquelle les barres de treillis (15, 16, 15', 16') s'étendent sur une ouverture de fenêtre (9, 19a, 19b, 19c) disposée dans la paroi latérale (6c, 7c), leurs axes longitudinaux se croisant à l'intérieur de la zone de hauteur de l'ouverture de fenêtre (9, 19a, 19b, 19c).

4. Caisse de véhicule ferroviaire selon l'une des revendications précédentes, dans laquelle l'ouverture de fenêtre (9) s'étend sensiblement sur l'ensemble de la longueur de la paroi latérale correspondante (6c).

5. Caisse de véhicule ferroviaire selon l'une des revendications précédentes, dans laquelle les treillis (15, 16, 15', 16') sont réalisés comme supports pour un vitrage pouvant être placé dans l'ouverture de fenêtre (9, 19a, 19b, 19c) et pouvant être fixé à au moins un nombre partiel de treillis (15, 16, 15', 16').

6. Caisse de véhicule ferroviaire selon la revendication 5, dans laquelle le vitrage est formé par au moins deux plaques (34, 35) s'étendant respectivement sur une section partielle de la longueur de la construction porteuse (10, 20, 21, 22) et qui sont réalisées avec des rebords pouvant être respectivement rassemblés dans la zone de l'un des treillis croisés (15, 16) et s'étendant selon son inclinaison, ces rebords délimitant entre eux une fente de séparation (36) pouvant être positionnée sur le treillis correspondant (15, 16).

7. Caisse de véhicule ferroviaire selon la revendication 5 ou 6, dans laquelle est destinée à recevoir plusieurs rangées de sièges (31, 32) avec des dossiers (31a, 32a) et en ce que les treillis (15, 16, 15', 16') y sont disposés de telle manière qu'ils se croisent respectivement dans une section longitudinale de la paroi latérale (6c, 7c) correspondant à la zone de disposition des dossiers (31a, 32a) d'au moins une des rangées de sièges (31, 32).

8. Caisse de véhicule ferroviaire selon la revendication 7, dans laquelle les treillis (15, 16, 15', 16') se croisent dans une position en hauteur, qui correspond au moins approximativement à la hauteur des dossiers (31a, 32a) des rangées de sièges (31, 32).

9. Véhicule ferroviaire, en particulier motrice, avec au moins une caisse de véhicule ferroviaire (6, 7) selon l'une des revendications 1 à 8.
